# EUROPÄISCHE PATENTSCHRIFT

(11) **EP 1 723 195 B1**
(45) Veröffentlichungstag und Bekanntmachung des Hinweises auf die Patenterteilung: **27.05.2009**
(21) Anmeldenummer: 05729820.0
(22) Anmeldetag: 02.03.2005
(51) Int. Cl.: C08J 7/04, B05D 7/00

(54) **VERFAHREN ZUR HERSTELLUNG EINER MEHRSCHICHTIGEN FOLIE F UND IHRE VERWENDUNG**
METHOD FOR PRODUCING A MULTILAYERED FILM F AND USE THEREOF
PROCEDE DE REALISATION D'UN FILM MULTICOUCHE F ET SON UTILISATION

(30) Priorität: 05.03.2004 DE 102004010787
(43) Veröffentlichungstag der Anmeldung: 22.11.2006
(73) Patentinhaber: BASF Coatings AG, 48165 Münster (DE)
(72) Erfinder: BIALLAS, Bernd, 48324 Albersloh (DE); DUSCHEK, Wolfgang, 48165 Münster (DE); SAEDLER, Markus, 48163 Münster (DE); STEGEMANN, Klaus Dieter, 48165 Münster (DE)
(74) Vertreter: Leifert & Steffan
(86) Internationale Anmeldenummer: PCT/EP2005/051138
(87) Internationale Veröffentlichungsnummer: WO 2005/085336

(56) Entgegenhaltungen:
- EP-A- 0 379 158
- DE-A1- 10 140 205

## Beschreibung

### Gebiet der Erfindung

Die vorliegende Erfindung betrifft ein neues Verfahren zur Herstellung einer mehrschichtigen Folie F. Außerdem betrifft die vorliegende Erfindung die Verwendung der nach dem neuen Verfahren hergestellten Folie F zur Herstellung farb- und/oder effektgebender Beschichtungen auf dreidimensionalen Substraten, insbesondere auf Automobilkarosserien.

### Stand der Technik

Farb- und/oder effektgebende Lackierungen von Kraftfahrzeugkarosserien, insbesondere PKW-Karosserien, bestehen heute vorzugsweise aus mehreren Lackschichten, die übereinander appliziert werden und unterschiedliche Eigenschaften aufweisen.

Beispielsweise werden nacheinander eine elektrisch abgeschiedene Elektrotauchlackierung (ETL) als Grundierung, eine Füllerlackierung oder Steinschlagschutzgrundierung, eine Basislackierung und eine Klarlackierung auf ein Substrat aufgebracht.

Hierbei dient die ETL insbesondere dem Korrosionsschutz des Blechs. Sie wird von der Fachwelt häufig auch als Grundierung bezeichnet.

Die Füllerlackierung dient der Abdeckung von Unebenheiten des Untergrundes und gewährt aufgrund ihrer Elastizität die Steinschlagbeständigkeit Gegebenenfalls kann die Füllerlackierung noch zur Verstärkung des Deckvermögens und zur Vertiefung des Farbtons der Lackierung dienen.

Die Basislackierung steuert die Farben und/oder die winkelabhängigen optischen Effekte bei. Dabei können sowohl die Helligkeit (Menge) als auch die Farbe (durch wellenlängenspezifische Absorption oder durch Interferenz) des reflektierten Lichts in Abhängigkeit des Betrachtungswinkels variieren, was auch als Helligkeits- und/oder Farbflop bezeichnet wird.

Die Klarlackierung dient der Verstärkung der optischen Effekte und dem Schutz der Lackierung vor mechanischer und chemischer Schädigung.

Basislackierung und Klarlackierung werden häufig auch zusammenfassend als Decklackierung bezeichnet. Ergänzend wird noch auf Römpp Lexikon Lacke und Druckfarben, Georg Thieme Verlag, Stuttgart, New York, 1998, Seiten 49 und 51, "Automobillacke" verwiesen.

Mehrschichtlackierungen dieser Art, die alle an sie gerichteten Anforderungen in vollem Umfang erfüllen, werden von der Fachwelt häufig auch als Class-A-Oberflächen bezeichnet.

Nachteilig ist, dass die Applikation dieser farb- und/oder effektgebenden Lackierungen häufig in vier getrennten Schritten erfolgen muss, zwischen denen jeweils abgelüftet sowie gegebenenfalls auch eingebrannt werden muss, was sehr aufwändige, dreidimensional ausgestaltete Lackierlinien in jedem Automobilwerk für die Lackierung von Karosserien und bei jedem Zulieferer für die Lackierung von Modulen und Anbauteilen erfordert und insgesamt zu einem hohen Zeit- und Arbeitsaufwand sowie zu erhöhten Energie- und Anlagekosten führt.

Außerdem hat sich in der Praxis herausgestellt, dass insbesondere die Applikationsbedingungen für die Basislacke das Farb- und das Flopverhalten der Basislackierungen stark beeinflussen kann. Gleiches gilt für unterschiedliche Trocknungsbedingungen für die applizierten Basislackschichten, die wegen der Verwendung unterschiedlicher Substrate, wie Kunststoffe und Metalle, eingestellt werden müssen. Diese Faktoren machen in der Praxis aufwendige Maßnahmen zum Farbtonangleich von Bauteilen notwendig, die in einer Karosserie unmittelbar aneinander stoßen (colour matching).

Um diese Probleme von vornherein zu vermeiden, werden neuerdings mehrschichtige, farb- und/oder effektgebende Folien zur Beschichtung von Kraftfahrzeugkarosserien vorgeschlagen.

Diese mehrschichtigen, farb- und/oder effektgebenden Folien umfassen bekanntermaßen eine Trägerfolie, mindestens eine farb- und/oder effektgebende Basislackierung und eine Klarlackierung. Sie entsprechen in ihrem Aufbau somit den herkömmlichen farb- und/oder effektgebenden Mehrschichtlackierungen.

Die mehrschichtigen, farb- und/oder effektgebenden Folien sollen aber unter gleich bleibenden Bedingungen hergestellt werden und auf beliebige Substrate appliziert werden können, wodurch ein substrat- und verfahrensunabhängiger Farbton und/oder optischer Effekt resultieren soll. Die Applikation soll durch Laminieren auf Metalle, Hinterspritzen mit thermoplastischen Kunststoffen, Hinterschäumen oder Hinterpressen erfolgen. Entsprechende Verfahren und Folien sind beispielsweise aus den amerikanischen Patenten US 4,810,540 A, US 4,931,324 A oder US 5,114,789 A, den europäischen Patenten EP 0 266 109 B1, EP 0 285 071 B1, EP 0 352 298 B1 oder EP 0 449 982 B1, den europäischen Patentanmeldungen EP 0 050 794 A1, EP 0 261 815 A1, EP 0 395 266 A2, EP 0 754 740 A2 oder EP 0 949 120 A1 oder den internationalen Patentanmeldungen WO 96/40449 A1 oder WO 03/016095 A1 bekannt. In dieser Weise soll die Forderung der Automobilindustrie nach Class-A-Oberflächen für Module und Anbauteile zur Herstellung neuer Automobilmodelle besser erfüllt werden können.

Allerdings sind die bisher bekannten Verfahren und farb- und/oder effektgebenden Folien nicht in der Lage, diese Forderung in vollem Umfang zu erfüllen.

Da die bekannten farb- und/oder effektgebenden Folien bei der Beschichtung von dreidimensionalen Substraten, insbesondere von Automobilkarosserien und Modulen und Anbauteilen hierfür, stark verstreckt werden, müssen ihre Basislackierungen und Klarlackierungen erheblich dicker sein als herkömmliche Basislackierungen und Klarlackierungen, damit ein isotroper Farbort, ein isotropes Flopverhalten und ein hohes Deckvermögen der Basislackierung sowie die optischen und schützenden Funktionen der Klarlackierung überall gewährleistet bleiben. Die Erhöhung der Trockenschichtdicke führt aber bei der Herstellung und der Anwendung der bekannten farb- und/oder effektgebenden Folien zu einer Reihe von Problemen, die in Summe die Herstellung von Class-A-Oberflächen sehr erschweren.

So können die bekannten farb- und/oder effektgebenden Folien häufig nicht in dem Maße verstreckt werden, wie es für die Beschichtung kompliziert geformter dreidimensionaler Substrate notwendig wäre. Wird dies dennoch versucht, kann es zur mechanischen Beschädigung und/oder Delamination einzelner oder aller Schichten kommen.

Die erforderlichen höheren Trockenschichtdicken bedingen bei der Herstellung der bekannten farb- und/oder effektgebenden Folien einen viel höheren Aufwand bei der Applikation und der Steuerung des Anteils an flüchtigen Substanzen in den einzelnen Schichten.

So können zu hohe Nassschichtdicken zu einem falschen Farbton der resultierenden Basislackierung führen. Eine unzureichende Trocknung kann eine unerwünschte Klebrigkeit der Basislackierung hervorrufen. Zu hohe Restlösemittel- und/oder Restwassergehalte und/oder ein zu schnelles Entfernen von Lösemitteln und/oder Wasser können schon ab Nassschichtdicken von 20 µm zur Bildung von Kochern und Nadelstichen in der Basislackierung führen. Dadurch resultieren Basislackierungen mit mangelnden technologischen Eigenschaften, insbesondere hinsichtlich der Haftung, der Steinschlagbeständigkeit, der Schwitzwasserbeständigkeit und des Farbtons und des Flopverhaltens.

Nach der Nass-in-nass-Applikation von Basislack und Klarlack kann es zu unerwünschten Wechselwirkungen zwischen den Nassschichten kommen. Insbesondere kann es zum Einbrechen des Klarlacks kommen, was die Vermattung der resultierenden Klarlackierung zur Folge hat. Der Stand der Technik macht nur punktuelle Vorschläge zur Lösung von Einzelproblemen:
- so sollen gemäß der EP 0 395 266 A1, Seite 5, Zeilen 47 bis 58, die applizierten Basislackschichten während einer Minute bis einer Stunde bei 71 bis 93 °C vorgetrocknet werden. Die Temperatur soll so gewählt werden, dass die Trägerfolie nicht verformt oder abgebaut wird.
   Nach der EP 0 754 740 A2, Seite 6, Spalte 9, Zeilen 7 bis 11, soll die applizierte Basislackschicht während 5 Minuten bei 60 °C vorgetrocknet werden.
- Nach der EP 0 266 109 A2 soll ein selbst tragender Verbund aus Basislackschicht und Klarlackschicht hergestellt werden, wobei allerdings keine spezifischen Trocknungsparameter angegeben werden.

Auch bei den Klarlackschichten können hohe Nassschichtdicken können schwerwiegende Probleme hervorrufen, sodass Klarlackierungen mit mangelnden technologischen Eigenschaften resultieren. Insbesondere kann ein zu hoher Anteil an flüchtigen Bestandteilen
- Oberflächendefekte an der Klarlackoberfläche unmittelbar nach der Trocknung hervorrufen, was zur Vermattung der Klarlackierung führt,
- Oberflächendefekte während der Lagerung der Folie beispielsweise durch Diffusion erzeugen, was zur Welligkeit der Klarlackierung führt, und/oder
- Oberflächendefekte beim endgültigen Aushärten der Klarlackschicht hervorrufen, was zu Kochern führt,
sowie Probleme bei der Weiterverarbeitung hervorrufen, wie beispielsweise die Blasenbildung beim Thermoformen und eine zu starke Haftung an der Schutzfolie. Bei der Vortrocknung muss außerdem noch streng darauf geachtet werden, dass die Trocknungstemperatur nicht oberhalb der Erweichungstemperatur der Trägerfolie liegt und keine thermische Vernetzung der Klarlackschicht und/oder der Aufbau eines zu hohen Molekulargewichts eintreten, weil sich ansonsten die geschilderten Probleme noch verschärfen.

Auch in diesem Zusammenhang macht der Stand der Technik nur punktuelle Vorschläge zur Lösung von Einzelproblemen:
- so sollen gemäß der EP 0 395.266 A1, Seite 6, Zeilen 39 bis 45, die applizierten Klarlackschichten während einer Minute bis einer Stunde bei 71 bis 93 °C vorgetrocknet oder gehärtet werden. Die Temperatur soll so gewählt werden, dass die Trägerfolie nicht verformt oder abgebaut wird.
- Nach der EP 0 754 740 A2, Seite 6, Spalte 9, Zeilen 11 bis 15, soll die applizierte Klarlackschicht während 5 Minuten bei 23 °C abgelüftet und während 45 Minuten bei 80 °C gehärtet werden.
- Nach der EP 0 266 109 A2 soll ein selbst tragender Verbund aus Basislackschicht und Klarlackschicht hergestellt werden, wobei allerdings keine spezifischen Trocknungsparameter angegeben werden.

Ein weiteres Problem stellen Störungen des Verlaufs beim Auftrag der zweiten Basislackschicht und der Klarlackschicht dar, welche dann auftreten, wenn die Temperatur der konditionierten Lackschicht, auf die die folgende Lackschicht aufgetragen wird, zu hoch ist. Solche Verlaufsstörungen führen inbesondere zu optischen Inhomogenitäten bei der lackierten Folie.

### Aufgabe der Erfindung

Aufgabe der vorliegenden Erfindung ist es, ein neues Verfahren zur Herstellung einer mehrschichtigen Folie F durch Beschichtung einer gegebenenfalls vorbehandelten Trägerfolie mit
1. einer pigmentierten Basislackschicht,
2. gegebenenfalls einer zweiten pigmentierten Basislackschicht sowie
3. einer Klarlackschicht
bereitzustellen, das die vorstehend geschilderten Nachteile des Standes der Technik nicht mehr länger aufweist, sondern in einfacher und sicherer Weise durchgeführt werden kann und hervorragend reproduzierbar mehrschichtige Folien F liefert, die problemlos gelagert und ohne mechanische Beschädigung und/oder Delamination einzelner oder aller Schichten verstreckt werden können und die nach dem Aufbringen auf dreidimensionale Substrate, beispielsweise durch Vorformen der Folien F und Hinterspritzen, und einer bevorzugt sich anschließenden Endhärtung beschichtete dreidimensionale Substrate, insbesondere beschichtete Automobilkarosserien oder Module und Anbauteile für Automobilkarosserien mit farb- und/oder effektgebenden Class-A-Oberflächen, liefern.

Insbesondere soll es das neue Verfahren gestatten, Basislackschichten in den erforderlichen hohen Nassschichtdicken zu erzeugen, ohne dass diese zu einem falschen Farbton und/oder einer unerwünschten Klebrigkeit der resultierenden Basislackierung führen. Auch soll die Bildung von Kochern in der Basislackierung vermieden werden. Dadurch sollen letztendlich Basislackierungen mit hervorragenden technologischen Eigenschaften, insbesondere hinsichtlich der Haftung, der Steinschlagbeständigkeit, der Schwitzwasserbeständigkeit und des Farbtons und des Flopverhaltens, resultieren.

Bei dem neuen Verfahren soll es nach der Nass-in-nass-Applikation von Basislack und Klarlack nicht mehr zu unerwünschten Wechselwirkungen zwischen den Nassschichten kommen. Insbesondere soll das Einbrechen des Klarlacks vermieden werden, weil dies die Vermattung der resultierend en Klarlackierung zur Folge hätte.

Mit Hilfe des neuen Verfahrens sollen auch die Klarlackschichten in den erforderlichen hohen Nassschichtdicken problemlos hergestellt werden können, sodass Klariackierungen mit hervorragenden technologischen Eigenschaften resultieren. Insbesondere sollen
- keine Oberflächendefekte an der Klarlackoberfläche unmittelbar nach der Trocknung, die zur Vermattung der Klarlackierung führen,
- keine Oberflächendefekte während der Lagerung der Folie, die zur Welligkeit der Klarlackierung führen, sowie
- keine Oberflächendefekte beim endgültigen Aushärten der Klarlackschicht, die zu Kochern führen,
mehr hervorgerufen werden Außerdem sollen keine Probleme bei der Weiterverarbeitung mehr eintreten, wie beispielsweise die Blasenbildung beim Thermoformen und eine zu starke Haftung an der Schutzfolie.

Weiterhin sollten Verlaufsprobleme, die beim Auftrag der zweiten Basislackschicht sowie beim Auftrag der Klarlackschicht auftreten, vermieden werden.

Bei dem neuen Verfahren soll die Trocknungstemperatur nicht oberhalb der Erweichungstemperatur der Trägerfolie liegen. Des Weiteren sollen bei dem neuen Verfahren keine thermische Vernetzung der Klarlackschicht und/oder der Aufbau eines zu hohen Molekulargewichts eintreten, sodass die Verformbarkeit und Verstreckbarkeit der mehrschichtigen Folien F nach wie vor gewährleistet sind.

### Die erfindungsgemäße Lösung

Demgemäß wurde das neue Verfahren zur Herstellung einer mehrschichtigen Folie F durch Beschichten einer gegebenenfalls vorbehandelten Trägerfolie mit
1. einer pigmentierten Basislackschicht,
2. gegebenenfalls einer zweiten pigmentierten Basislackschicht sowie
3. einer Klarlackschicht,
gefunden, bei dem
a. ein pigmentierter Basislack auf die Trägerfolie aufgetragen wird, wodurch eine nasse Basislackschicht 1a resultiert, die auf einen Restgehalt an flüchtigen Substanzen von x < 10 Gew.-%, bezogen auf die Basislackschicht, eingestellt wird, wodurch eine konditionierte Basislackschicht 1 b resultiert,
b. der Verbund aus Trägerfolie und konditionierter Basislackschicht 1b auf eine Temperatur von < 50 °C an der Oberfläche der Basislackschicht 1b eingestellt wird
c. gegebenenfalls ein zweiter pigmentierter Basislack oder derselbe pigmentierte Basislack zum zweiten Mal auf die konditionierte und temperierte Basislackschicht 1b aufgetragen wird, wodurch eine nasse Basislackschicht 2a resultiert, die auf einen Restgehalt an flüchtigen Substanzen von y < 10 Gew.-%, bezogen auf die Basislackschicht, eingestellt wird, wodurch eine konditionierte Basislackschicht 2b resultiert,
d. gegebenenfalls der Verbund aus Trägerfolie und konditionierten Basislackschichten 1b und 2b auf eine Temperatur vor < 50 °C an der Oberfläche der Basislackschicht 2b eingestellt wird,
e. ein Klarlack auf die konditionierte und temperierte Basislackschicht 1b oder 2b aufgetragen wird, wodurch eine nasse Klarlackschicht 3a resultiert, die auf einen Restgehalt an flüchtigen Substanzen von z < 5 Gew.-%, bezogen auf die Klarlackschicht, eingestellt wird, wodurch eine konditionierte, verformbare, thermisch und/oder mit aktinischer Strahlung härtbare Klarlackschicht 3b resultiert.

Im Folgenden wird das neue Verfahren zur Herstellung einer mehrschichtigen Folie F als »erfindungsgemäßes Verfahren« bezeichnet.

Außerdem wurde die neue Verwendung der mit Hilfe des erfindungsgemäßen Verfahrens hergestellten mehrschichtigen Folie F für die Herstellung von farb- und/oder effektgebenden Folien, die der Beschichtung von dreidimensionalen Substraten dienen, gefunden, was im Folgenden als »erfindungsgemäße Verwendung« bezeichnet wird.

### Die Vorteile der erfindungsgemäßen Lösung

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Verfahrens und der erfindungsgemäßen Verwendung gelöst werden konnte.

Insbesondere war es überraschend, dass das erfindungsgemäße Verfahren die Nachteile des Standes der Technik nicht mehr länger aufwies, sondern in einfacher und sicherer Weise durchgeführt werden konnte und hervorragend reproduzierbar mehrschichtige Folien F lieferte, die problemlos gelagert und ohne mechanische Beschädigung und/oder Delamination einzelner oder aller Schichten verstreckt werden konnten und die nach dem Aufbringen auf dreidimensionale Substrate, beispielsweise durch Vorformen der Folien F und Hinterspritzen, und einer bevorzugt sich anschließenden Endhärtung beschichtete dreidimensionale Substrate, insbesondere beschichtete Automobilkarosserien oder Module und Anbauteile für Automobilkarosserien mit farb- und/oder effektgebenden Class-A-Oberflächen, lieferten.

Insbesondere gestattete es das erfindungsgemäße Verfahren, Basislackschichten in den erforderlichen hohen Nassschichtdicken zu erzeugen, ohne dass diese zu einem falschen Farbton und/oder eine unerwünschte Klebrigkeit der resultierenden Basislackierung führten. Auch konnte die Bildung von Kochern in der Basislackierung vermieden werden. Dadurch resultierten letztendlich Basislackierungen mit hervorragenden technologischen Eigenschaften, insbesondere hinsichtlich der Haftung, der Steinschlagbeständigkeit, der Schwitzwasserbeständigkeit und des Farbtons und des Flopverhaltens.

Bei dem erfindungsgemäßen Verfahren kam es nach der Nass-in-nass-Applikation von Basislack und Klarlack nicht mehr zu unerwünschten Wechselwirkungen zwischen den Nassschichten. Insbesondere konnte das Einbrechen des Klarlacks und damit die Vermattung der resultierenden Klarlackierung vermieden werden.

Mit Hilfe des erfindungsgemäßen Verfahrens konnten auch die Klarlackschichten in den erforderlichen hohen Nassschichtdicken problemlos hergestellt werden, sodass Klarlackierungen mit hervorragenden technologischen Eigenschaften resultierten. Insbesondere traten
- keine Oberflächendefekte an der Klarlackoberfläche unmittelbar nach der Trocknung, die zur Vermattung der Klarlackierung führen,
- keine Oberflächendefekte während der Lagerung der Folie, die zur Welligkeit der Klarlackierung führen, sowie
- keine Oberflächendefekte beim endgültigen Aushärten der Klarlackschicht, die zu Kochern führen,
mehr auf. Außerdem traten keine Probleme, wie beispielsweise die Blasenbildung beim Thermoformen und eine zu starke Haftung an der Schutzfolie bei der Weiterverarbeitung, mehr ein.

Mit Hilfe des erfindungsgemäßen Verfahrens konnten weiterhin Verlaufsprobleme beim Auftrag der zweiten Basislackschicht sowie beim Auftrag der Klarlackschicht vermieden werden.

Bei dem erfindungsgemäßen Verfahren war sicher gewährleistet, dass die Trocknungstemperatur nicht oberhalb der Erweichungstemperatur der Trägerfolie lag. Des Weiteren traten bei dem neuen Verfahren keine thermische Vernetzung der Klarlackschicht und/oder der Aufbau eines zu hohen Molekulargewichts mehr ein, sodass die Verformbarkeit und Verstreckbarkeit der mehrschichtigen Folien F nach wie vor gewährleistet waren.

### Ausführliche Beschreibung der Erfindung

### Die bei dem erfindungsgemäßen Verfahren eingesetzten Materialien

Bei dem erfindungsgemäßen Verfahren können alle üblichen und bekannten Trägerfolien, Schutzfolien und Haftschichten eingesetzt werden, wie sie beispielsweise in den amerikanischen Patenten US 4,810,540 A, US 4,931,324 A oder US 5,114,789 A, den europäischen Patenten EP 0 266109 B1, EP 0 285 071 B1, EP 0 352 298 B1 oder EP 0 449 982 B1, den europäischen Patentanmeldungen EP 0 050 794 A1, EP 0 261 815 A1, EP 0 395 266 A2, EP 0 754 740 A2 oder EP 0 949 120 A1 oder den internationalen Patentanmeldungen WO 96/40449 A1 oder WO 03/016095 A1 beschrieben werden. Die Trägerfolien können pigmentiert oder unpigmentiert sein. Insbesondere werden die aus der WO 03/016095 A1, Seite 16, Zeile 19, bis Seite 17, Zeile 3, beschriebenen Trägerfolien eingesetzt. Dabei können die pigmentierten Trägerfolien in ihrem Farbton den später hierauf befindlichen Basislackierungen angepasst sein. Die zu beschichtende Oberfläche der Trägerfolien kann vor der Applikation der Lacke in üblicher und bekannter Weise chemisch und/oder physikalisch vorbehandelt werden. Die Schutzfolien, welche auf den Verbund Trägerfolie-Lackschicht-Verbund aufgebracht werden, sind mit den Klarlackschichten 3b verträglich.

Als pigmentierte Basislacke für die Herstellung der pigmentierten Basislackschichten 1a sowie gegebenenfalls 2a können alle üblichen und bekannten, insbesondere wässrigen, Basislacke verwendet werden, wie sie beispielsweise in der WO 03/016095 A1, Seite 10, Zeile 15, bis Seite 14, Zeile 22, beschrieben werden. Weiterhin bevorzugt werden wäßrige Basislacke eingesetzt, wie sie in EP 0 754 740 und in US 5,030,514 A beschrieben werden. Dabei können für die Herstellung der pigmentierten Basislackschichten 1a sowie gegebenenfalls 2a unterschiedliche Basislacke oder derselbe Basislack verwendet werden.

Als Klarlacke für die Herstellung der Klarlackschichten 3a können alle üblichen und bekannten, thermisch und/oder mit aktinischer Strahlung härtbaren, flüssigen Klarlacke verwendet werden, wie sie beispielsweise in der WO 03/016095 A1, Seite 25, Zeile 7, bis Seite 27, Zeile 11, beschrieben werden. Bevorzugt werden Klarlacke eingesetzt, die mit UV-Strahlung endgehärtet werden und die beispielsweise in DE 199 17 965 A1 beschrieben sind.

Unter aktinischer Strahlung ist hier und im Folgenden elektromagnetische Strahlung, wie nahes Infrarot, (NIR), sichtbares Licht, UV-Strahlung, Röntgenstrahlung und Gammastrahlung, insbesondere UV-Strahlung, und Korpuskularstrahlung, wie Elektronenstrahlung, Alphastrahlung, Betastrahlung, Protonenstrahlung und Neutronenstrahlung, insbesondere Elektronenstrahlung, zu verstehen.

Die bei der Durchführung des erfindungsgemäßen Verfahrens eingesetzten Verfahren und Vorrichtungen

Vorzugsweise werden bei dem erfindungsgemäßen Verfahren Vorrichtungen eingesetzt, die die kontinuierliche Beschichtung von bandförmigen Trägerfolien mit Basislacken und Klarlacken gestatten. Dabei befinden sich die Applikationsvorrichtungen und die Trägerfolien in relativer Bewegung zueinander. Insbesondere sind die Applikationsvorrichtungen stationär, wobei die Trägerfolien in kontinuierlicher Bewegung hieran vorbeigeführt werden. Dabei können die Applikationsvorrichtungen quer zur Bewegungsrichtung der Trägerfolien hin und her bewegt werden.

Vorzugsweise wird der Basislack mit Hilfe eines gerichteten Applikationsverfahrens aufgetragen. Beispiele geeigneter gerichteter Applikationsverfahren sind aus der WO 03/016095 A1, Seite 15, Zeilen 6 bis 19, bekannt. Insbesondere werden Rakel, Gießvorrichtungen und Walzen verwendet.

Ist aufgrund der Pigmentierung eine bestimmte Gleichmäßigkeit der Verteilung erforderlich und/oder bezweckt man mit der Pigmentierung die Einstellung eines ganz besonderen Farbtons und/oder optischen Effekts, dann wird auf die konditionierte Basislackschicht 1b noch die Basislackschicht 2a aufgetragen. Vorzugsweise wird dabei der Basislack mit Hilfe eines nicht gerichteten Applikationsverfahrens appliziert, das in der resultierenden Basislackschicht 2a bzw. 2b keine Anordnung der Pigmente in einer Vorzugsrichtung hervorruft; d. h., die Pigmente sind in der Basislackschicht 2a und damit auch in der konditionierten Basislackschicht- 2b isotrop verteilt. Beispiele geeigneter nicht gerichteter Applikationsverfahren und Vorrichtungen hierfür sind aus der WO 03/016095 A1, Seite 20, Zeile 4, bis Seite 23, Zeile 25, bekannt. Insbesondere werden pneumatische oder elektrostatische Spritzvorrichtungen verwendet, wie sie in der WO 03/016095 A1, Seite 20, Zeile 4, bis Seite 23, Zeile 25 beschrieben sind.

Um den zur Anpassung an eine vorgegebene Farbtonvorlage erforderlichen Farb- und/oder Flopeffekt der letztendlich resultierenden Basislackierung zu erzielen, kann die Applikation der Basislackschicht 2a auch durch elektrostatische Hochrotation oder durch elektrostatisch unterstützte pneumatische Zerstäubung erfolgen.

Dabei kann die Basislackschicht 1a mit Hilfe eines der vorstehend beschriebenen, gerichteten Applikationsverfahren, das in der resultierenden Basislackschicht 1a bzw. 1b eine Anordnung der Pigmente in einer Vorzugsrichtung, d. h., eine anisotrope Verteilung der Pigmente hervorruft, aufgetragen werden.

Wenn eine Trägerfolie eingesetzt wird, die hinsichtlich ihrer Farbgebung weitgehend oder vollständig der zu erreichenden Farbe der letztendlich resultierenden Basislackierung entspricht, kann als Basislackschicht 1a lediglich eine nicht deckende, farb- und/oder effektgebende Schicht durch elektrostatisch unterstützte pneumatische Zerstäubung oder pneumatische, elektrostatische Hochrotation appliziert werden.

Die flüssigen Klarlacke können mit Hilfe der vorstehend beschriebenen gerichteten und nicht gerichteten Applikationsverfahren aufgetragen werden. Bevorzugt werden die Klarlacke mit gerichteten Applikationsverfahren aufgetragen, ganz bevorzugt mit Extrusionsgießem. Sind die flüssigen Klarlacke (auch) mit aktinischer Strahlung härtbar, werden sie unter Ausschluss von aktinischer Strahlung aufgetragen und weiter verarbeitet.

Für die Konditionierung der nassen Basislackschichten 1a und gegebenenfalls 2a sowie der nassen Klarlackschichten 2a werden bevorzugt thermische und/oder Konvektionsverfahren verwendet, wobei üblich und bekannten Vorrichtungen, wie Durchlauföfen, NIR- und IR-Heizstrahler, Gebläse und Blastunnel, eingesetzt werden. Diese Vorrichtungen können auch miteinander kombiniert werden.

Die im Verlauf des erfindungsgemäßen Verfahrens resultierenden Verbunde aus Trägerfolie und Basislackschicht 1b oder Trägerfolie, Basislackschicht 1b und Basislackschicht 2b können vor der Applikation der jeweils nächsten Schicht aufgewickelt, zwischengelagert, transportiert und einer anderen Applikationsvorrichtung zugeführt werden, worin sie mit dieser nächsten Schicht beschichtet werden. Zu diesem Zweck können die Verbunde mit Schutzfolie bedeckt werden, die vor der Applikation der nächsten Schicht wieder abgezogen werden.

Vorzugsweise wird aber das erfindungsgemäße Verfahren in einer kontinuierlichen Anlage durchgeführt, die alle notwendigen Applikationsvorrichtungen und Vorrichtungen zur Konditionierung enthält. Darüber hinaus enthält diese kontinuierliche Anlage übliche und bekannte Vorrichtungen für die Zufuhr der Basislacke und Klarlacke zu den Applikationsvorrichtungen, Abwickelvorrichtungen für die Trägerfolien und Schutzfolien und Aufwickeivorrichtungen für die mehrschichtigen Folien F, Antriebsvorrichtungen für die Bewegung der Folien und gegebenenfalls der Applikationsvorrichtungen, Absaugvorrichtungen für die flüchtigen Substanzen, Kühlgebläse und/oder Kühlwalzen für die Einstellung der Oberflächentemperatur der konditionierten Lackschichten, Mess- und Regelvorrichtungen sowie gegebenenfalls Vorrichtungen für die Abschirmung von aktinischer Strahlung.

### Die Durchführung des erfindungsgemäßen Verfahrens

### Verfahrenschritt a.

Im Verfahrenschritt a. wird ein pigmentierter Basislack auf die Trägerfolie appliziert, wodurch eine nasse Basislackschicht 1a resultiert, die bevorzugt durch Erhitzen und/oder Konvektion auf einen Restgehalt an flüchtigen Substanzen von x < 10 Gew.-%, vorzugsweise < 7 Gew.-%, besonders bevorzugt < 5 Gew.-%, jeweils bezogen auf die Basislackschichten eingestellt wird, wodurch eine konditionierte Basislackschicht 1b resultiert. Die Applikation erfolgt bei Kabinenbedingungen, wie sie beispielsweise aus der OEM-Serienlackierung bekannt sind.

Vorzugsweise weist die nasse Basislackschicht 1a eine Schichtdicke von 50 bis 150 µm auf.

Hier und im Folgenden sind unter »flüchtigen Substanzen« alle Bestandteile der Basislacke und auch der Klarlacke zu verstehen, die nach der Härtung der aus dem Basislacken und Klarlacken hergestellten Basislackschichten und Klarlackschichten nicht in den resultierenden Basislackierungen und Klarlackierungen verbleiben. Insbesondere handelt es sich bei den flüchtigen Substanzen um organische Lösemittel und Wasser.

Vorzugsweise wird vor der Konditionierung die Basislackschicht 1a während 1 bis 6 Minuten, besonders bevorzugt während 2 bis 4 Minuten abgelüftet. Besonders bevorzugt werden bei der Ablüftung die Temperatur, die Luftfeuchte und die Luftgeschwindigkeit, die in der Applikationszone herrschen, eingestellt. Geht der Trocknung eine Ablüftung voraus, erfolgt die Trocknung in einer separaten Trocknungszone.

Bei der Konditionierung der Basislackschicht 1a wird bevorzugt folgende Trocknungskinetik angewandt:
- Im ersten Trocknungsabschnitt kommt eine durchschnittliche Trocknungsrate von 10 bis 40 Gew.-%/min, bezogen auf den Gesamtgehalt an flüchtigen Substanzen der applizierten Basislackschicht, zur Anwendung, bis ein Restgehalt an flüchtigen Substanzen von x = 12 bis 30 Gew.-%, bezogen auf die Basislackschicht, erreicht ist, und
- im letzten Trocknungsabschnitt kommt eine durchschnittliche Trocknungsrate von 1 bis 6 Gew-%/min, bezogen auf den Gesamtgehalt an flüchtigen Substanzen der applizierten Basislackschicht, zur Anwendung, bis ein Restgehalt an flüchtigen Substanzen von x < 10 Gew.-%, besonders bevorzugt < 7 Gew.-%, insbesondere < 5 Gew.-%, jeweils bezogen auf die Basislackschicht, erreicht ist.

Vorzugsweise wird die Konditionierung der Basislackschicht 1a bei Temperaturen von 30 bis 100 °C durchgeführt. Bevorzugt wird dabei eine Luftfeuchte von 3 bis 15 g/kg eingestellt. Besonders bevorzugt beträgt die Dauer der Konditionierung 1 bis 10 Minuten. Insbesondere liegen die Luftgeschwindigkeiten bei 0,2 bis 15 m/s.

Vorzugsweise weist die resultierende konditionierte Basislackschicht 1b eine Schichtdicke von 10 bis 30 µm auf.

### Verfahrenschritt b.

Im Verfahrenschritt b. wird der resultierende Verbund aus Trägerfolie und konditionierter Basislackschicht 1b auf eine Temperatur von < 50 °C, insbesondere < 35 °C, an der Oberfläche der Basislackschicht 1b eingestellt.

### Verfahrenschritt c.

Im optionalen Verfahrenschritt c. wird ein zweiter pigmentierter Basislack oder derselbe Basislack zum zweiten Mal auf die konditionierte und temperierte Basislackschicht 1b aufgetragen, wodurch eine nasse Basislackschicht 2a resultiert, die bevorzugt durch Erhitzen und/oder Konvektion auf einen Restgehalt an flüchtigen Substanzen von y < 10 Gew.-%, besonders bevorzugt < 7 Gew.-%, insbesondere < 5 Gew.-%, jeweils bezogen auf die Basislackschicht, eingestellt wird, wodurch eine konditionierte Basislackschicht 2b resultiert.

Vorzugsweise weist die nasse Basislackschicht 2a eine Schichtdicke von 25 bis 100 µm auf.

Vorzugsweise wird vor der Konditionierung die Basislackschicht 2a während 1 bis 6 Minuten, besonders bevorzugt während 3 bis 5 Minuten abgelüftet Besonders bevorzugt werden bei der Ablüftung die Temperatur, die Luftfeuchte und die Luftgeschwindigkeit, die in der Applikationszone herrschen, eingestellt Geht der Trocknung eine Ablüftung voraus, erfolgt die Trocknung in einer separaten Trocknungszone.

Bei der Konditionierung der Basislackschicht 2a wird bevorzugt die folgende Trocknungskinetik angewandt:
- Im ersten Trocknungsabschnitt eine durchschnittliche Trocknungsrate von 10 bis 40 Gew.-%/min, bezogen auf den Gesamtgehalt an flüchtigen Substanzen der applizierten Basislackschicht, bis ein Restgehalt an flüchtigen Substanzen von y = 12 bis 30 Gew.-%, bezogen auf die Basislackschicfit, erreicht ist, und
- im letzten Trocknungsabschnitt eine durchschnittliche Trocknungsrate von 1,5 bis 4 Gew-%/min, bezogen auf den Gesamtgehalt an flüchtigen Substanzen der applizierten Basislackschicht, bis ein Restgehalt an flüchtigen Substanzen von x < 10 Gew.-%, besonders bevorzugt < 7 Gew.-%, insbesondere < 5 Gew.-%, jeweils bezogen auf die Basislackschicht, erreicht ist.

Vorzugsweise wird die Konditionierung der Basislackschicht 2a bei Temperaturen von 30 bis 100 °C durchgeführt. Bevorzugt wird dabei eine Luftfeuchte von 3 bis 15 g/kg eingestellt. Besonders bevorzugt beträgt die Dauer der Konditionierung 1 bis 10 Minuten. Insbesondere liegen die Luftgeschwindigkeiten bei 0,2 bis 15 m/s.

Vorzugsweise weist die resultierende konditionierte Basislackschicht 2b eine Schichtdicke von 5 bis 20 µm auf.

Bevorzugt liegt die Gesamtschichtdicke der Basislackschichten 1b und 2b bei 15 bis 50 µm.

### Verfahrenschritt d.

Im Rahmen des erfindungsgemäßen Verfahrens wird der Verfahrenschritt d. durchgeführt, wenn eine zweite Basislackschicht 2b vorhanden ist. Bei dem Verfahrenschritt d. wird der resultierende Verbund aus Trägerfolie und konditionierten Basislackschichten 1 b und 2b auf eine Temperatur von < 50 °C, insbesondere < 35 °C, an der Oberfläche der Basislackschicht 2b eingestellt

### Verfahrenschritt e.

Im Verfahrenschritt e. wird ein Klarlack auf die konditionierte und temperierte Basislackschicht 1b oder 2b aufgetragen, wodurch eine nasse Klarlackschicht 3a resultiert, die durch Erhitzen und/oder Konvektion auf einen Restgehalt an flüchtigen Substanzen von z < 5 Gew.-%, insbesondere < 3 Gew.-%, bezogen auf die Klarlackschicht, eingestellt wird, wodurch eine konditionierte, verformbare, thermisch und/oder mit aktinischer Strahlung härtbare Klarlackschicht 3b resultiert.

Vorzugsweise weist die nasse Klarlackschicht 3a eine Schichtdicke von 80 bis 160 µm auf.

Vorzugsweise wird vor der Konditionierung die Klarlackschicht 3a während 2 bis 8 Minuten, besonders bevorzugt während 5 bis 7 Minuten abgelüftet. Besonders bevorzugt werden bei der Ablüftung die Temperatur, die Luftfeuchte und die Luftgeschwindigkeit, die in der Applikationszone herrschen, eingestellt. Geht der Trocknung eine Ablüftung voraus, erfolgt die Trocknung in einer separaten Trocknungszone.

Bei der Konditionierung der Klarlackschicht 3a wird bevorzugt die folgende Trocknungskinetik angewandt:
- Im ersten Trocknungsabschnitt eine durchschnittliche Trocknungsrate von 10 bis 30 Gew.-%/min, bezogen auf den Gesamtgehalt an flüchtigen Substanzen der applizierten Klarlackschicht, bis ein Restgehalt an flüchtigen Substanzen von z = 10 bis 15 Gew.-%, bezogen auf die Klarlackschicht, erreicht ist, und
- im letzten Trocknungsabschnitt eine durchschnittliche Trocknungsrate von 0,5 bis 3 Gew-%/min, bezogen auf den Gesamtgehalt an flüchtigen Substanzen der applizierten Klarlackschicht, bis ein Restgehalt an flüchtigen Substanzen von z < 7 Gew.-%, besonders bevorzugt < 5 Gew.-%, insbesondere < 3 Gew.-%, jeweils bezogen auf die Klarlackschicht, erreicht ist.

Vorzugsweise wird die Klarlackschicht 3a während bei Ofentemperaturen von 80 bis 140 °C, insbesondere 90 bis 120 °C, konditioniert.

Vorzugsweise liegt die Schichtdicke der konditionierten Klarlackschicht 3b bei 40 bis 80 µm.

Mit dem Verfahrenschritt e. resultiert die mehrschichtige Folie F, womit das erfindungsgemäße Verfahren im Wesentlichen abgeschlossen ist. Es können sich aber weitere geeignete Verfahrensschritte anschließen.

### Verfahrenschritt f.

Im optionalen Verfahrenschritt f. wird der resultierende Verbund aus Trägerfolie, konditionierter Basislackschicht 1b sowie gegebenenfalls konditionierter Basistackschicht 2b und konditionierter Klarlackschicht 3b (= mehrschichtige Folie F) auf eine Temperatur von < 50 °C, insbesondere < 35 °C, an der Oberfläche der Klarlackschicht 3b eingestellt.

### Verfahrenschritt g.

Im optionalen Verfahrenschritt g. wird auf die mehrschichtige Folie F eine übliche und bekannte Schutzfolie aufgelegt.

### Verfahrenschritt h.

Im optionalen Verfahrenschritt h. wird die mehrschichtige Folie F zu einer Rolle gewickelt oder zu kleineren Platinen zugeschnitten. Die Rolle kann bis zur weiteren Verwendung der mehrschichtigen Folie gelagert und/oder transportiert werden.

### Die erfindungsgemäße Verwendung

Die mit Hilfe des erfindungsgemäßen Verfahrens hergestellten mehrschichtigen Folien F sind hervorragend für die Herstellung von farb- und/oder effektgebende Folien geeignet. Diese sind wiederum hervorragend für die Beschichtung von Substraten, vorzugsweise dreidimensionalen Substraten, insbesondere Automobilkarosserien und Module oder Anbauteile hierfür, geeignet. Zu diesem Zweck werden die mehrschichtigen Folien F mit den Substraten verbunden. Dabei werden sie vor, während oder nach ihrer Verbindung verstreckt. Vorzugsweise werden die mehrschichtigen Folien F nach ihrer Verbindung mit den Substraten durch thermische Härtung und/oder Härtung mit aktinischer Strahlung in die farb- und/oder effektgebenden Folien umgewandelt. Vorzugsweise wird die Härtung, wie in der WO 03/016095 A1, Seite 27, Zeilen 19, bis Seite 28, Zeile 24, beschrieben, durchgeführt.

Insbesondere liefern die erfindungsgemäßen Folien F nach ihrem Vorformen, dem Hinterspritzen und der sich anschließenden Endhärtung beschichtete dreidimensionale Substrate, insbesondere beschichtete Automobilkarosserien oder Module und Anbauteile für Automobilkarosserien, mit farb- und/oder effektgebenden Class-A-Oberflächen.

### Beispiele 1 bis 3

### Die Herstellung der mehrschichtigen Folien F1 bis F3

Für die Herstellung der mehrschichtigen Folie F1 des Beispiels 1 wurden die handelsübliche, dunkelgrau pigmentierte, 800 µm dicke Trägerfolie auf der Basis von Luran ® der Firma BASF Aktiengesellschaft sowie der handelsübliche Basislack Brillantsilber der Firma BASF Coatings AG (Gehalt an nicht flüchtigen Substanzen ca, 20 Gew.-%, bezogen auf den Lack )verwendet.

Für die Herstellung der mehrschichtigen Folie F2 des Beispiels 2 wurden die handelsübliche, hellgrau pigmentierte, 800 µm dicke Trägerfolie auf der Basis von Luran ® der Firma BASF Aktiengesellschaft sowie der handelsübliche Basislack Travertinbeige der Firma BASF Coatings AG (Gehalt an nicht flüchtigen Substanzen ca. 20 Gew.-%, bezogen auf den Lack) verwendet.

Für die Herstellung der mehrschichtigen Folie F3 des Beispiels 3 wurden die handelsübliche, schwarz pigmentierte, 800 µm dicke Trägerfolie auf der Basis von Luran ® der Firma BASF Aktiengesellschaft sowie der handelsübliche Basislack Obsidianschwarz der Firma BASF Coatings AG (Gehalt an nicht flüchtigen Substanzen ca. 20 Gew.-%, bezogen auf den Lack) verwendet.

Für die Beispiele 1 bis 3 wurde ein Klarlack gemäß Beispiel 1 der DE 199 17 965 A1 (Gehalt an nicht flüchtigen Substanzen ca 50 Gew.-%, bezogen auf den Lack) verwendet.

Die mehrschichtigen Folien F1 bis F3 wurden nach der folgenden allgemeinen Herstellungsvorschrift hergestellt

### Allgemeine Herstellungsvorschrift:

Die zu beschichtende Oberfläche der Trägerfolie wurde einer Coronavorbehandlung mit 0,5 Kilowatt unverzogen.

Der Basislack wurde mit Hilfe einer Kastenrakel einer Breite von 37 cm bei einer Bandgeschwindigkeit von 0,5 m/min auf die Trägerfolie appliziert. Die Applikation wurde bei einer schwachen Luftströmung von 0,2 m/s, einer konstanten Temperatur von 21 ± 1 °C und einer konstanten relativen Luftfeuchte 65 ± 5% durchgeführt. Die Schichtdicke der resultierenden nassen Basislackschicht 1a betrug 100 µm.

Die nasse Basislackschicht 1a wurde während 3 Minuten bei diesen Bedingungen abgelüftet.

Die Basislackschicht 1a wurde im ersten Trocknungsabschnitt während 3 Minuten mit einer durchschnittlichen Trocknungsrate von 29 Gew.-%/min, bezogen auf den Gesamtgehalt an flüchtigen Substanzen in der applizierten Basislackschicht, bis zu einem Restgehalt an flüchtigen Substanzen von x = 13 Gew.-%, bezogen auf die Basislackschicht, getrocknet.

Im letzten Trocknungsabschnitt wurde die Basislackschicht 1a während 3 Minuten mit einer durchschnittlichen Trocknungsrate von 3 Gew-%/min, bezogen auf den Gesamtgehalt an flüchtigen Substanzen in der applizierten Basislackschicht, bis zu einem Restgehalt an flüchtigen Substanzen von x = 4 Gew.-%, bezogen auf die Basislackschicht, getrocknet.

Dabei lagen die Lufttemperatur bei 90 °C, die Luftfeuchte bei 10g/min und die Luftgeschwindigkeiten bei 10 m/s.

Die resultierende konditionierte Basislackschicht 1b einer Schichtdicke von ca. 20 µm wurde mit Kühlwalzen auf eine Oberflächentemperatur < 30 °C eingestellt.

Auf die konditionierte und temperierte Basislackschicht 1b wurde derselbe Basislack unter den folgenden Bedingungen mit Hilfe eines Systems für die pneumatische Spritzapplikation aufgetragen:
- Ausflussrate: 100 ml/min;
- Luftdrücke: Zerstäuberluft: 2,5 bar; Hornluft: 2,5 bar;
- Verfahrgeschwindigkeit der Düsen so hoch, dass eine Überlappung der Sprühstrahlen von 60% resultiert;
- Abstand Düse - Folie: 30 cm.

Die Applikation wurde bei einer schwachen Luftströmung von 0,5 m/s (senkrechte Anströmung der Folie), einer konstanten Temperatur von 21 ± 1 °C und einer konstanten relativen Luftfeuchte 65 ± 5% durchgeführt. Die Schichtdicke der resultierenden nassen Basislackschicht 2a betrug 50 ± 2 µm. Die Basislackschicht 2a wurde unter diesen Bedingungen während 3 Minuten abgelüftet.

Die Basislackschicht 2a wurde im ersten Trocknungsabschnitt während 3 Minuten mit einer durchschnittlichen Trocknungsrate von 29 Gew-%/min, bezogen auf den Gesamtgehalt an flüchtigen Substanzen in der applizierten Basislackschicht, bis zu einem Restgehalt an flüchtigen Substanzen von y = 13 Gew.-%, bezogen auf die Basislackschicht, getrocknet.

Im letzten Trocknungsabschnitt wurde die Basislackschicht 2a während 3 Minuten mit einer Tröcknungsrate von 3 Gew-%/min, bezogen auf den Gesamtgehalt an flüchtigen Substanzen in der applizierten Basislackschicht, bis zu einem Restgehalt an flüchtigen Substanzen von y = 4 Gew.-%, bezogen auf die Basislackschicht, getrocknet.

Dabei lagen die Lufttemperatur bei 90 °C, die Luftfeuchte bei 10g/min und die Luftgeschwindigkeiten bei 10 m/s.

Die resultierende konditionierte Basislackschicht 2b einer Schichtdicke von ca. 10 µm wurde mit Kühlwalzen auf eine Oberflächentemperatur < 30 °C eingestellt.

Auf die konditionierte und temperierte Basislackschicht 2b wurde mit Hilfe einer Kastenrakel einer Breite von 37 cm der Klarlack aufgetragen. Die Applikation wurde bei einer schwachen Luftströmung von 0,2 m/s, einer konstanten Temperatur von 21 ± 1 °C und einer konstanten relativen Luftfeuchte 65 ± 5% durchgeführt. Die Schichtdicke der resultierenden nassen Klarlackschicht 3a betrug 120 µm. Sie wurde unter den genannten Bedingungen während 6 Minuten abgelüftet.

Die Klarlackschicht 3a wurde im ersten Trocknungsabschnitt während 5 Minuten mit einer durchschnittlichen Trocknungsrate von 17,5 Gew-%/min, bezogen auf den Gesamtgehalt an flüchtigen Substanzen in der applizierten Klarlackschicht, bis zu einem Restgehalt an flüchtigen Substanzen von z = 12,5 Gew.-%, bezogen auf die Klarlackschicht, getrocknet.

Die Klarlackschicht 3a wurde im letzten Trocknungsabschnitt während 10 Minuten mit einer durchschnittlichen Trocknungsrate von 1 Gew-%/min, bezogen auf den Gesamtgehalt an flüchtigen Substanzen in der applizierten Klarläckschicht, bis zu einem Restgehalt an flüchtigen Substanzen von z = 2,5 Gew.-%, bezogen auf die Klarlackschicht, getrocknet.

### Dabei lag die Lufttemperatur im Ofen bei 119 °C für alle Trocknungsstufen.

Die resultierende konditionierte Klarlackschicht 3b einer Schichtdicke von 60 µm wurde mit Kühlwalzen, auf eine Oberflächentemperatur < 30 °C eingestellt und mit einer Schutzfolie aus Polypropylen bedeckt.

Die resultierende mehrschichtige Folie F wurde zu einer Rolle gewickelt und in dieser Form bis zur weiteren Verwendung gelagert.

Die mehrschichtigen Folien F1 bis F3 konnten problemlos zu Rollen gewickelt und bis zur weiteren Verwendung gelagert und/oder transportiert werden, ohne dass dabei ihrer hervorragenden anwendungstechnischen Eigenschaften, insbesondere ihre Dimensionsstabilität einerseits und ihrer Verformbarkeit andererseits Schaden erlitten. Sie konnten problemlos zu Platinen geschnitten werden. Die Platinen konnten in luft- und feuchtedichte Folien eingeschweißt werden und in dieser Form monatelang gelagert werden.

Die mehrschichtigen Folien F1 bis F3 waren hervorragend für die Herstellung von Class-A-Oberflächen auf Automobilkarosserien und für die Herstellung von Modulen und Anbauteilen mit Class-A-Oberflächen geeignet.

## Patentansprüche

1. Verfahren zur Herstellung einer mehrschichtigen Folie F durch Beschichten einer gegebenenfalls vorbehandelten Trägerfolie mit
1. einer pigmentierten Basislackschicht,
2. gegebenenfalls einer zweiten pigmentierten Basislackschicht sowie
3. einer Klarlackschicht,
**dadurch gekennzeichnet, dass**
a. ein pigmentierter Basislack auf die Trägerfolie aufgetragen wird, wodurch eine nasse Basislackschicht 1a resultiert, die auf einen Restgehalt an flüchtigen Substanzen von x < 10 Gew.-%, bezogen auf die Basislackschicht, eingestellt wird, wodurch eine konditionierte Basislackschicht 1b resultiert,
b. der Verbund aus Trägerfolie und konditionierter Basislackschicht 1b auf eine Temperatur von < 50 °C an der Oberfläche der Basislackschicht 1 b eingestellt wird,
c. gegebenenfalls ein zweiter pigmentierter Basislack oder derselbe pigmentierte Basislack zum zweiten Mal auf die konditionierte und temperierte Basislackschicht 1b aufgetragen wird, wodurch eine nasse Basislackschicht 2a resultiert, die auf einen Restgehalt an flüchtigen Substanzen von y < 10 Gew.-%, bezogen auf die Basislackschicht, eingestellt wird, wodurch eine konditionierte Basislackschicht 2b resultiert,
d. gegebenenfalls der Verbund aus Trägerfolie und konditionierten Basislackschichten 1b und 2b auf eine Temperatur von < 50 °C an der Oberfläche der Basislackschicht 2b eingestellt wird,
e. ein Klarlack auf die konditionierte und temperierte Basislackschicht 1b oder 2b aufgetragen wird, wodurch eine nasse Klarlackschicht 3a resultiert, die durch auf einen Restgehalt an flüchtigen Substanzen von z < 5 Gew.-%, bezogen auf die Klarlackschicht, eingestellt wird, wodurch eine konditionierte, verformbare, thermisch und/oder mit aktinischer Strahlung härtbare Klarlackschicht 3b resultiert.

2. Verfahren nach Anspruch 1, **dadurch gekennzeichnet, daß** der Restgehalt an flüchtigen Substanzen in den Verfahrensschritten a., c. und/oder e. durch Erhitzen und/oder Konvektion eingestellt wird.

3. Verfahren nach Anspruch 1 oder 2, **dadurch gekennzeichnet, dass** man im Verfahrenschritt a.
- im ersten Trocknungsabschnitt eine durchschnittliche Trocknungsrate von 10 bis 40 Gew.-%/min, bezogen auf den Gesamtgehalt an flüchtigen Substanzen der applizierten Basislackschicht, bis ein Restgehalt an flüchtigen Substanzen von x = 12 bis 30 Gew.-%, bezogen auf die Basislackschicht, erreicht ist, und
- im letzten Trocknungsabschnitt eine durchschnittliche Trocknungsrate von 1 bis 6 Gew-%/min, bezogen auf den Gesamtgehalt an flüchtigen Substanzen der applizierten Basislackschicht, bis ein Restgehalt an flüchtigen Substanzen von x < 10 Gew.-%, besonders bevorzugt < 7 Gew.-%, insbesondere < 5 Gew.-%, jeweils bezogen auf die Basislackschicht, erreicht ist,
anwendet.

4. Verfahren nach einem der Ansprüche 1 bis 3, **dadurch gekennzeichnet, dass** die Basislackschicht 1b in dem Verfahrenschritt b. auf eine Temperatur < 35 °C an ihrer Oberfläche eingestellt wird.

5. Verfahren nach einem der Ansprüche 1 bis 4, **dadurch gekennzeichnet, dass** man im Verfahrenschritt c.
- Im ersten Trocknungsabschnitt eine durchschnittliche Trocknungsrate von 10 bis 40 Gew.-%/min, bezogen auf den Gesamtgehalt an flüchtigen Substanzen der applizierten Basislackschicht, bis ein Restgehalt an flüchtigen Substanzen von y = 12 bis 30 Gew.-%, bezogen auf die Basislackschicht, erreicht ist, und
- im letzten Trocknungsabschnitt eine durchschnittliche Trocknungsrate von 1,5 bis 4 Gew-%/min, bezogen auf den Gesamtgehalt an flüchtigen Substanzen der applizierten Basislackschicht, bis ein Restgehalt an flüchtigen Substanzen von x < 10 Gew.-%, besonders bevorzugt < 7 Gew.-%, insbesondere < 5 Gew.-%, jeweils bezogen auf die Basislackschicht, erreicht ist,
anwendet.

6. Verfahren nach einem der Ansprüche 1 oder 5, **dadurch gekennzeichnet, dass** die Basislackschicht 2b in dem Verfahrenschritt d. auf eine Temperatur < 35 °C an ihrer Oberfläche 2b eingestellt wird.

7. Verfahren nach einem der Ansprüche 1 bis 6, **dadurch gekennzeichnet, dass** man im Verfahrenschritt e.
- Im ersten Trocknungsabschnitt eine durchschnittliche Trocknungsrate von 10 bis 30 Gew.-%/min, bezogen auf den Gesamtgehalt an flüchtigen Substanzen der applizierten Klarlackschicht, bis ein Restgehalt an flüchtigen Substanzen von z = 10 bis 15 Gew.-%, bezogen auf die Klarlackschicht, erreicht ist, und
- im letzten Trocknungsabschnitt eine durchschnittliche Trocknungsrate von 0,5 bis 3 Gew-%/min, bezogen auf den Gesamtgehalt an flüchtigen Substanzen der applizierten Klarlackschicht, bis ein Restgehalt an flüchtigen Substanzen von z < 7 Gew.-%, besonders bevorzugt < 5 Gew.-%, insbesondere < 3 Gew.-%, jeweils bezogen auf die Klarlackschicht, erreicht ist,
anwendet.

8. Verfahren nach einem der Ansprüche 1 bis 7, **dadurch gekennzeichnet, dass** der Verbund aus Basislackschicht 1b, gegebenenfalls Basislackschicht 2b und Klarlackschicht 3b in einem Verfahrenschritt f. auf eine Temperatur < 50 °C an der Oberfläche der Klarlackschicht 3b eingestellt wird.

9. Verfahren nach einem der Ansprüche 1 bis 8, **dadurch gekennzeichnet, dass** die die Oberfläche der Klarlackschicht 3b in einem Verfahrenschritt g. mit einer Schutzfolie bedeckt wird.

10. Verfahren nach einem der Ansprüche 1 bis 9, **dadurch gekennzeichnet, dass** im Verfahrenschritt a. der Basislack mit Hilfe eines kontinuierlichen Verfahrens appliziert wird.

11. Verfahren nach einem der Ansprüche 1 bis 10, **dadurch gekennzeichnet, dass** im Verfahrenschritt c. der Basislack mit Hilfe eines kontinuierlichen Verfahrens appliziert wird.

12. Verfahren nach einem der Ansprüche 1 bis 11, **dadurch gekennzeichnet, dass** im Verfahrenschritt e. der Klarlack mit Hilfe eines kontinuierlichen Verfahrens appliziert wird.

13. Verfahren nach einem der Ansprüche 1 bis 12, **dadurch gekennzeichnet, dass** im Verfahrenschritt a. der Basislack mit Hilfe eines gerichteten Applikationsverfahrens aufgetragen wird.

14. Verfahren nach einem der Ansprüche 1 bis 13, **dadurch gekennzeichnet, dass** im Verfahrenschritt c. der Basislack mit Hilfe eines nicht gerichteten Applikationsverfährens aufgetragen wird.

15. Verfahren nach einem der Ansprüche 1 bis 14, **dadurch gekennzeichnet, dass** die freie Seite der Trägerfolie mit einer Haftschicht bedeckt ist.

16. Verwendung der mit Hilfe des Verfahrens gemäß einem der Ansprüche 1 bis 15 hergestellten mehrschichtigen Folien F für die Herstellung von farb- und/oder effektgebenden Folien.

17. Verwendung nach Anspruch 16, **dadurch gekennzeichnet, dass** die farb- und/oder effektgebenden Folien der Beschichtung von Substraten dienen.

18. Verwendung nach Anspruch 16 oder 17, **dadurch gekennzeichnet, dass** die mehrschichtigen Folien F nach ihrer Verbindung mit den Substraten durch thermische Härtung und/oder Härtung mit aktinischer Strahlung in farb- und/oder effektgebenden Beschichtungen umgewandelt werden.

19. Verwendung nach Anspruch 18, **dadurch gekennzeichnet, dass** die mehrschichtigen Folien F vor, während oder nach ihrer Verbindung mit den Substraten verstreckt werden.

20. Verwendung nach einem der Ansprüche 17 bis 19, **dadurch gekennzeichnet, dass** die Substrate Automobilkarosserien und Module und Anbauteile hierfür sind.

## Claims

1. A process for producing a multilayer sheet S by coating an optionally pretreated carrier sheet with
1. a pigmented basecoat film,
2. if desired, a second pigmented basecoat film, and
3. a clearcoat film
**characterized in that**
a. a pigmented basecoat material is applied to the carrier sheet to give a wet basecoat film 1a, which is adjusted to a residual volatiles content of x < 10% by weight, based on the basecoat film, to give a conditioned basecoat film 1b,
b. the assembly comprising carrier sheet and conditioned basecoat film 1b is adjusted to a temperature of < 50°C on the surface of the basecoat film 1b,
c. if desired, a second pigmented basecoat material, or the same pigmented basecoat material for the second time, is applied to the conditioned and temperature-adjusted basecoat film 1b to give a wet basecoat film 2a, which is adjusted to a residual volatiles content of y < 10% by weight, based on the basecoat film, to give a conditioned basecoat film 2b,
d. if appropriate, the assembly comprising carrier sheet and conditioned basecoat films 1b and 2b is adjusted to a temperature of < 50°C at the surface of the basecoat film 2b,
e. a clearcoat material is applied to the conditioned and temperature-adjusted basecoat film 1b or 2b to give a wet clearcoat film 3a, which is adjusted to a residual volatiles content of z < 5% by weight, based on the clearcoat film, to give a conditioned, deformable clearcoat film 3b which is curable thermally and/or with actinic radiation.

2. The process as claimed in claim 1, **characterized in that** the residual volatiles content in steps a., c. and/or e. is adjusted by heating and/or convection.

3. The process as claimed in claim 1 or 2, **characterized in that** in step a.
- in the first drying section an average drying rate of 10 to 40% by weight/min is employed, based on the total volatiles content of the applied basecoat film, until a residual volatiles content of x = 12 to 30% by weight, based on the basecoat film, is reached, and
- in the last drying section an average drying rate of 1 to 6% by weight/min is employed, based on the total volatiles content of the applied basecoat film, until a residual volatiles content of x < 10% by weight, more preferably < 7% by weight, in particular < 5% by weight, based in each case on the basecoat film, is reached.

4. The process as claimed in any one of claims 1 to 3, **characterized in that** the basecoat film 1b in step b. is adjusted to a temperature < 35°C at its surface.

5. The process as claimed in any one of claims 1 to 4, **characterized in that** in step c.
- in the first drying section an average drying rate of 10 to 40% by weight/min is employed, based on the total volatiles content of the applied basecoat film, until a residual volatiles content of y = 12 to 30% by weight, based on the basecoat film, is reached, and
- in the last drying section an average drying rate of 1.5 to 4% by weight/min is employed, based on the total volatiles content of the applied basecoat film, until a residual volatiles content of y < 10% by weight, more preferably < 7% by weight, in particular < 5% by weight, based in each case on the basecoat film, is reached.

6. The process as claimed in either of claims 1 and 5, **characterized in that** the basecoat film 2b in step d. is adjusted to a temperature < 35°C at its surface 2b.

7. The process as claimed in any one of claims 1 to 6, **characterized in that** in step e.
- in the first drying section an average drying rate of 10 to 30% by weight/min is employed, based on the total volatiles content of the applied clearcoat film, until a residual volatiles content of z = 10 to 15% by weight, based on the clearcoat film, is reached, and
- in the last drying section an average drying rate of 0.5 to 3% by weight/min is employed, based on the total volatiles content of the applied clearcoat film, until a residual volatiles content of z < 7% by weight, more preferably < 5% by weight, in particular < 3% by weight, based in each case on the clearcoat film, is reached.

8. The process as claimed in any one of claims 1 to 7, **characterized in that** the assembly comprising basecoat film 1b, if appropriate basecoat film 2b, and clearcoat film 3b is adjusted in a step f. to a temperature < 50°C at the surface of the clearcoat film 3b.

9. The process as claimed in any one of claims 1 to 8, **characterized in that** the surface of the clearcoat film 3b in a step g. is covered with a protective sheet.

10. The process as claimed in any one of claims 1 to 9, **characterized in that** the basecoat material in step a. is applied by means of a continuous method.

11. The process as claimed in any one of claims 1 to 10, **characterized in that** the basecoat material in step c. is applied by means of a continuous method.

12. The process as claimed in any one of claims 1 to 11, **characterized in that** the clearcoat material in step e. is applied by means of a continuous method.

13. The process as claimed in any one of claims 1 to 12, **characterized in that** the basecoat material in step a. is applied by means of a directed application method.

14. The process as claimed in any one of claims 1 to 13, **characterized in that** the basecoat material in step c. is applied by means of an undirected application method.

15. The process as claimed in any one of claims 1 to 14, **characterized in that** the free side of the carrier sheet has been covered with an adhesion coat.

16. The use of the multilayer sheets S produced by the process as claimed in any one of claims 1 to 15 for producing color and/or effect films.

17. The use as claimed in claim 16, **characterized in that** the color and/or effect films serve for the coating of substrates.

18. The use as claimed in claim 16 or 17, **characterized in that** after they have been joined with the substrates the multilayer sheets S are converted by thermal curing and/or curing with actinic radiation into color and/or effect coatings.

19. The use as claimed in claim 18, **characterized in that** the multilayer sheets S are stretched before, during or after their joining to the substrates.

20. The use as claimed in any one of claims 17 to 19, **characterized in that** the substrates are automobile bodies and modules and exterior mounted components therefor.

## Revendications

1. Procédé pour la production d'un film multicouche F par revêtement d'un film de support éventuellement prétraité, avec
1. une couche de peinture de fond pigmentée,
2. éventuellement une deuxième couche de peinture de fond pigmentée ainsi que
3. une couche de vernis,
**caractérisé en ce que**
a. on applique sur le film de support une peinture de fond pigmentée, de sorte qu'il en résulte une couche humide de peinture de fond 1a qui est ajustée à une teneur résiduelle en substances volatiles de x < 10 % en poids, par rapport à la couche de peinture de fond, de sorte qu'il en résulte une couche de peinture de fond conditionnée 1b,
b. on porte le composite de film de support et couche de peinture de fond conditionnée 1b à une température de < 50 °C à la surface de la couche de peinture de fond 1b,
c. éventuellement on applique sur la couche de peinture de fond 1b, conditionnée et portée à température, une deuxième peinture de fond pigmentée ou pour la deuxième fois la même peinture de fond pigmentée, de sorte qu'il en résulte une couche humide de peinture de fond 2a, qui est ajustée à une teneur résiduelle en substances volatiles de y < 10 % en poids, par rapport à la couche de peinture de fond, de sorte qu'il en résulte une couche de peinture de fond conditionnée 2b,
d. éventuellement on porte le composite de film de support et couches de peinture de fond conditionnées 1b et 2b à une température de < 50 °C à la surface de la couche de peinture de fond 2b,
e. on applique un vernis sur la couche de peinture de fond 1b ou 2b, conditionnée et portée à température, de sorte qu'il en résulte une couche humide de vernis 3a, qui est ajustée à une teneur résiduelle en substances volatiles de z < 5 % en poids, par rapport à la couche de vernis, de sorte qu'il en résulte une couche de vernis conditionnée 3b, déformable, durcissable thermiquement et/ou par un rayonnement actinique.

2. Procédé selon la revendication 1, **caractérisé en ce que** la teneur résiduelle en substances volatiles dans les étapes a., c. et/ou e. du procédé est ajustée par chauffage et/ou convexion.

3. Procédé selon la revendication 1 ou 2, **caractérisé en ce que** dans l'étape a. du procédé on utilise
- dans le premier stade du séchage une vitesse moyenne de séchage de 10 à 40 % en poids/min, par rapport à la teneur totale en substances volatiles de la couche de peinture de fond appliquée, jusqu'à ce que soit atteinte une teneur résiduelle en substances volatiles de x = 12 à 30 % en poids, par rapport à la couche de peinture de fond, et
- dans le dernier stade du séchage une vitesse moyenne de séchage de 1 à 6 % en poids/min, par rapport à la teneur totale en substances volatiles de la couche de peinture de fond appliquée, jusqu'à ce que soit atteinte une teneur résiduelle en substances volatiles de x = 10 % en poids, de façon particulièrement préférée < 7 % en poids, en particulier < 5 % en poids, chaque fois par rapport à la couche de peinture de fond.

4. Procédé selon l'une quelconque des revendications 1 à 3, **caractérisé en ce que** dans l'étape b. du procédé on porte la couche de peinture de fond 1b à une température de < 35 °C à sa surface.

5. Procédé selon l'une quelconque des revendications 1 à 4, **caractérisé en ce que** dans l'étape c. du procédé on utilise
- dans le premier stade du séchage une vitesse moyenne de séchage de 10 à 40 % en poids/min, par rapport à la teneur totale en substances volatiles de la couche de peinture de fond appliquée, jusqu'à ce que soit atteinte une teneur résiduelle en substances volatiles de y = 12 à 30 % en poids, par rapport à la couche de peinture de fond, et
- dans le dernier stade du séchage une vitesse moyenne de séchage de 1,5 à 4 % en poids/min, par rapport à la teneur totale en substances volatiles de la couche de peinture de fond appliquée, jusqu'à ce que soit atteinte une teneur résiduelle en substances volatiles de y < 10 % en poids, de façon particulièrement préférée < 7 % en poids, en particulier < 5 % en poids, chaque fois par rapport à la couche de peinture de fond.

6. Procédé selon l'une quelconque des revendications 1 à 5, **caractérisé en ce que** dans l'étape d. du procédé on porte la couche de peinture de fond 2b à une température < 35 °C à sa surface 2b.

7. Procédé selon l'une quelconque des revendications 1 à 6, **caractérisé en ce que** dans l'étape e. du procédé on utilise
- dans le premier stade du séchage une vitesse moyenne de séchage de 10 à 30 % en poids/min, par rapport à la teneur totale en substances volatiles de la couche de vernis appliquée, jusqu'à ce que soit atteinte une teneur résiduelle en substances volatiles de z = 10 à 15 % en poids, par rapport à la couche de vernis, et
- dans le dernier stade du séchage une vitesse moyenne de séchage de 0,5 à 3 % en poids/min, par rapport à la teneur totale en substances volatiles de la couche de vernis appliquée, jusqu'à ce que soit atteinte une teneur résiduelle en substances volatiles de z < 7 % en poids, de façon particulièrement préférée < 5 % en poids, en particulier < 3 % en poids, chaque fois par rapport à la couche de vernis.

8. Procédé selon l'une quelconque des revendications 1 à 7, **caractérisé en ce que** dans une étape f. du procédé on porte le composite de couche de peinture de fond 1b, éventuellement couche de peinture de fond 2b et couche de vernis 3b à une température < 50 °C à la surface de la couche de vernis 3b.

9. Procédé selon l'une quelconque des revendications 1 à 8, **caractérisé en ce que** dans une étape g. du procédé la surface de la couche de vernis 3b est recouverte d'un film protecteur.

10. Procédé selon l'une quelconque des revendications 1 à 9, **caractérisé en ce que** dans l'étape a. du procédé on applique la peinture de fond à l'aide d'un processus continu.

11. Procédé selon l'une quelconque des revendications 1 à 10, **caractérisé en ce que** dans l'étape c. du procédé on applique la peinture de fond à l'aide d'un processus continu.

12. Procédé selon l'une quelconque des revendications 1 à 11, **caractérisé en ce que** dans l'étape e. du procédé on applique le vernis à l'aide d'un processus continu.

13. Procédé selon l'une quelconque des revendications 1 à 12, **caractérisé en ce que** dans l'étape a. du procédé on applique la couche de fond à l'aide d'un processus d'application orienté.

14. Procédé selon l'une quelconque des revendications 1 à 13, **caractérisé en ce que** dans l'étape c. du procédé on applique la couche de fond à l'aide d'un processus d'application non orienté.

15. Procédé selon l'une quelconque des revendications 1 à 14, **caractérisé en ce que** la face libre du film de support est recouverte d'une couche adhésive.

16. Utilisation des films F multicouches, produit selon l'une quelconque des revendications 1 à 15, pour la production de fils colorants et/ou à effet.

17. Utilisation selon la revendication 16, **caractérisée en ce que** les films colorants et/ou à effet servent au revêtement de subjectiles.

18. Utilisation selon la revendication 16 ou 17, **caractérisée en ce qu'**après leur assemblage avec les subjectiles les films multicouches F sont transformés, par durcissement thermique et/ou durcissement par un rayonnement actinique, en revêtements colorants et/ou à effet.

19. Utilisation selon la revendication 18, **caractérisée en ce que** les films multicouches F sont étirés avant, pendant ou après leur assemblage avec les subjectiles.

20. Utilisation selon l'une quelconque des revendications 17 à 19, **caractérisée en ce que** les subjectiles sont des carrosseries d'automobiles et des modules et des pièces de construction pour celles-ci.
